# EUROPÄISCHE PATENTANMELDUNG

(11) **EP 2 025 549 A1**
(43) Veröffentlichungstag der Anmeldung: **18.02.2009**
(21) Anmeldenummer: 07015801.9
(22) Anmeldetag: 10.08.2007
(51) Int. Cl.: B60J 7/10, B60J 7/12

(54) **Planenansteuerungsvorrichtung**

(71) Anmelder: R & L Elektrotechnik Markus Ritter, 34560 Fritzlar/Haddamar (DE)
(72) Erfinder: Ritter, Markus, 34560 Fritzlar (DE); Lechner, Stefan, 34537 Bad Wildungen-Wega (DE)

(57) **Zusammenfassung**

Die Erfindung betrifft eine Vorrichtung zur selbsttätigen Ansteuerung einer Befülleinrichtung für einen Luftschlauch, der zwischen den starren Querstreben und der Plane eines Fahrzeugdaches angeordnet ist und zur Vermeidung von Eisbildung auf Fahrzeugdächern dient.

Die Ansteuervorrichtung umfasst einen Grenztemperaturgeber und einen Geber zur Generierung eines den Stillstand des Fahrzeugs repräsentierenden Signals, wobei die Ansteuervorrichtung ferner so ausgelegt ist, dass ein Befüllen des Luftschlauchs nur bei Stillstand des Fahrzeugs sowie bei Unterschreiten einer einstellbaren Grenztemperatur erfolgen kann und nur bei Vorliegen beider Bedingungen ausgelöst wird und bei Wegfall einer Bedingung ein automatisches Entlüften des Luftschlauchs eingeleitet wird.

## Beschreibung

Die Erfindung betrifft eine Vorrichtung zur selbsttätigen Ansteuerung einer Befülleinrichtung für einen Luftschlauch, der zwischen den starren Querstreben und der Plane eines Fahrzeugdaches angeordnet ist und zur Vermeidung von Wasser und Eisbildung auf Fahrzeugdächern dient.
Derartige Luftschläuche werden benutzt, um die normalerweise flach aufliegenden Planen etwa längs der Mitte des Daches anzuheben, so dass ein zu beiden Seiten nach außen gerichtetes Gefälle entsteht und das Ansammeln von Wasser vermieden wird.
Wasseransammlungen auf LKW-Planendächern können im Winter zu einer großen Gefahr für andere Verkehrsteilnehmer werden, wenn während der Fahrt Eisbrocken vom Dach herunterfallen. Permanente Schrägstellungen oder Aufwölbungen der LKW-Dächer werden heute im Hinblick auf eine maximale Ausnutzung der zulässigen Fahrzeugprofile kaum noch gebaut. Die Fahrzeughalter sind allerdings verpflichtet, die Planendächer vor Fahrtbeginn eisfrei zu machen (§ 23 StVO). Die ggf. damit verbundene mühselige und gefährliche Arbeit kann man vermeiden, wenn eine Ansammlung von Wasser gar nicht auftreten kann, weil mit dem eingangs genannten Luftschlauch ein ausreichendes Gefälle für das Abfließen des Wassers geschaffen wird.

Einrichtungen mit aufblasbaren Luftschläuchen für diesen Zweck sind aus der DE 203 00 603 U1 und der DE 102 24 291 A1 bekannt geworden. Sie weisen die nachfolgend beschriebenen Mängel auf. Außerdem ist in der DE 20 205 015 778 U1 bereits vorgeschlagen worden, die Eisbildung auf LKW-Planendächern mittels elektrischer Heizeinrichtung zu verhindern.
Für das Befüllen des Luftschlauchs aus dem Druckluftkessel, der seinerseits vom Kompressor für das Druckluft-Bremssystem bzw. für das Reifenfüllsystem gefüllt wird, wird vielfach noch ein manuell zu bedienendes Dreiwegeventil benutzt. Das hat den Nachteil, dass man von der Zuverlässigkeit der Bedienungsperson abhängig ist, die unter Umständen nicht einkalkuliert, dass über Nacht Eisbildung auftreten könnte, oder aber wegen Übermüdung schlicht vergisst, das Planendach bei Gefahr der Eisbildung mittels des Luftschlauchs anzuheben. Außerdem muss sichergestellt werden, dass der Luftschlauch während der Fahrt deaktiviert ist, damit das zulässige Fahrzeugprofil nicht überschritten wird.
Es besteht somit die Aufgabe, eine Vorrichtung der eingangs genannten Art dahingehend weiterzubilden, dass die Eisbildung zuverlässig vermieden werden kann, ohne dass eine Bedienungsperson eingreifen muss.

Zur Lösung dieser Aufgabe wird vorgeschlagen, dass die selbsttätig arbeitende Ansteuervorrichtung einen Grenztemperaturgeber und einen Geber zur Generierung eines den Stillstand des Fahrzeugs repräsentierenden Signals umfasst, wobei die Ansteuervorrichtung ferner so ausgelegt ist, dass ein Befüllen des Luftschlauches nur bei Stillstand sowie bei Unterschreiten einer einstellbaren Grenztemperatur erfolgen kann und nur bei Vorliegen beider Bedingungen ausgelöst wird bzw. bei Wegfall einer Bedingung ein automatisches Entlüften des Luftschlauchs eingeleitet wird.

Der Erfindung liegt die Erwägung zugrunde, dass die Bedingungen "Temperatur" und "Stillstand" erfüllt sein müssen, damit das Befüllen des Luftschlauches unabhängig von einer Bedienungsperson eingeleitet werden kann. Oberhalb einer kritischen Grenztemperatur ist die Aktivierung des Luftschlauchs nicht erforderlich und bei Nicht-Stillstand muss ein Befüllen verhindert bzw. bei Wegfall des Signals "Stillstand" das Entlüften des Luftschlauchs eingeleitet werden.

In weiterer Ausbildung des Erfindungsgedankens ist ein Zeitrelais vorgesehen, mit dem eine weitere Bedingung steuertechnisch abgedeckt werden kann. Bei einem kurzen Stillstand, etwa einem Tankstopp oder einer Kaffeepause ist die Aktivierung des Luftschlauchs nicht erforderlich. Über das Zeitrelais kann eine "Wartezeit" eingestellt werden, die erfahrungsgemäß verstreichen soll, bis ein Befüllen des Luftschlauchs freigegeben wird. Damit können unnötige Aktivierungen vermieden werden.

Zur Erzeugung eines Stillstandssignals kann man auf das Bremssystem zurückgreifen, das eine im Fahrbetrieb zur Verzögerung benutzte Betriebsbremse und eine Sicherheitsbremse umfasst. Die Betriebsbremse wird über ein pneumatisches oder hydraulisches Drucksystem aktiviert und sowohl im Fahrbetrieb, als auch im Parkbetrieb eingesetzt. Da aber bei längeren Stillstandszeiten nicht auszuschließen ist, dass im Drucksystem infolge kleinste Undichtigkeiten, die unbemerkt bleiben können, der für eine ausreichende Bremskraft erforderlichen Druckes zu Aktivierung der Betriebsbremse unterschritten werden kann, ist eine Sicherheitsbremse erforderlich, die mit einer mechanischer Feder als Kraftspeicher arbeitet. Diese Feder wird im Fahrbetrieb durch das Drucksystem der Betriebsbremse zusammengedrückt und dadurch die Sicherheitsbremse deaktiviert. Ein Stillstand des Fahrzeuges kann also daraus abgeleitet werden, dass im Drucksystem ein bestimmter Mindestdruck zur Aktivierung der Betriebsbremse vorhanden ist. Umgekehrt kann geschlossen werden, dass die Sicherheitsbremse deaktiviert ist, wenn in ihrem Drucksystem ein bestimmter Mindestdruck zu Spannung der Feder anliegt.
Das Über- bzw. Unterschreiten vorgegebener Grenzwerte für den Druck im System der Betriebsbremse bzw. der Sicherheitsbremse kann demnach als Stillstand- bzw. Fahrsignal für die Befülleinrichtung des Luftschlauches in dem Sinne benutzt werden, dass Druck im System der Betriebsbremse "Stillstand" und Druck im System der Sicherheitsbremse " Fahrt" bedeutet, wobei in beider Fällen selbstverständlich jeweils eine gewisse Mindestdauer für die Signalerzeugung zu berücksichtigen ist. Für den besonderes kritischen Fall, dass der Druck bei längerer Stillstandszeit langsam absinkt, können die gemessenen Druckwerte beider Systeme auch kumulativ ausgewertet werden, wobei aus Sicherheitsgründen ohnehin gewährleistet sein muss, dass bei sinkendem Druck die Sicherheitsbremse infolge Dekompression der Feder aktiviert wird, bevor die Betriebsbremse unwirksam wird.

Als Geber für das Stillstandssignal kann erfindungsgemäß auch der Zündschlüssel für die Antriebsmaschine eines LKW-Zuges in dem Sinne benutzt werden, dass abgezogener Zündschlüssel als "Stillstand" und eingesteckter Zündschlüssel als "Bewegung" interpretiert wird. Ist die Ansteuervorrichtung nicht in das Steuer- und Regelsystem der Antriebseinheit integriert, sondern im Anhänger oder Sattelauflieger angeordnet, muss das Stillstandssignal in geeigneter Form an die Ansteuervorrichtung übermittelt werden, was in den meisten Fällen über das ohnehin vorhandene, mehrpolige Verbindungskabel erfolgen kann. Ggf. muss eine zusätzliche Verbindung eingerichtet werden.

Eine weitere Problematik ergibt sich, wenn das Befüllen des Luftschlauchs auch bei von der Antriebseinheit abgekoppelten Anhängern oder Sattelaufliegern selbsttätig erfolgen soll und ein "Stillstandssignal" nicht von dem Geber "Zündschloss" generiert werden kann. Für diesen Fall ist erfindungsgemäß vorgesehen, dass die Ansteuervorrichtung mit einer von der Antriebseinheit unabhängigen Stromquelle ausgestattet ist und dass als Stillstandssignalgeber ein Schock-Sensor, ein Bewegungsmelder, ein Rotationsmesser oder ein Gerät für Satelliten-Ortungssysteme eingesetzt wird.
Der Schock-Sensor generiert bei Abwesenheit von Fahrzeugvibrationen ein Stillstandssignal, der Bewegungsmelder meldet entgegen seiner üblichen Schaltung die Nicht-Bewegung, beim Rotationsmesser wird das Nicht-Drehen eines Rades oder einer Achse registriert und das Gerät für Satelliten-Ortungssysteme kann direkt zur Erzeugung eines Nicht-Bewegungssignals benutzt werden. Damit sind verschiedene Ausführungsformen des Erfindungsgedankens beschrieben, ohne das dieser auf die Ausführungsformen beschränkt sein soll. Wie oben dargestellt, bestehen die wesentlichen Merkmale der Erfindung für eine selbsttätige Ansteuerung der Befülleinrichtung darin, ein Temperatursignal mit einem Stillstandssignal zu kombinieren und ggf. noch ein Zeitrelais für die Verzögerung der Befüllung vorzusehen.

## Patentansprüche

1. Vorrichtung zur selbsttätigen Ansteuerung einer Befülleinrichtung für einen Luftschlauch, der zwischen den starren Querstreben und der Plane eines Fahrzeugdaches angeordnet ist und zur Vermeidung von Eisbildung auf Fahrzeugdächern dient, **dadurch gekennzeichnet, dass** die Ansteuervorrichtung einen Grenztemperaturgeber und einen Geber zur Generierung eines den Stillstand des Fahrzeugs repräsentierenden Signals umfasst, wobei die Ansteuervorrichtung ferner so ausgelegt ist, dass ein Befüllen des Luftschlauchs nur bei Stillstand des Fahrzeugs sowie bei Unterschreiten einer einstellbaren Grenztemperatur erfolgen kann und nur bei Vorliegen beider Bedingungen ausgelöst wird und bei Wegfall einer Bedingung ein automatisches Entlüften des Luftschlauchs eingeleitet wird.

2. Vorrichtung nach Anspruch 1 **dadurch gekennzeichnet, dass** außerdem ein Zeitrelais vorgesehen ist, mit dem sichergestellt wird, dass ein Befüllen des Luftschlauchs erst nach Ablauf einer einstellbaren Zeit ausgelöst wird.

3. Vorrichtung nach Anspruch 1 oder 2, **dadurch gekennzeichnet, dass** der Druck im pneumatischen (oder hydraulischen) System zur Betätigung der Bremsen gemessen und daraus ein Stillstandsignal abgeleitet wird.

4. Vorrichtung nach Anspruch 3 **dadurch gekennzeichnet, dass** ein Stillstandssignal generiert wird, wenn der Druck im System für die Funktionsbremse oberhalb eines vorgegeben Grenzwertes liegt

5. Vorrichtung nach Anspruch 3, **dadurch Gekennzeichnet, dass** ein Stillstandsignal generiert wird, wenn der Druck im System für die Sicherheitsbremse unterhalb eines vorgegeben Grenzwertes liegt.

6. Vorrichtung nach den Ansprüchen 3 bis 5, **dadurch Gekennzeichnet, dass** ein Stillstandssignal generiert wird, wenn die Bedingungen der Ansprüche 2 und 3 beide erfüllt sind.

7. Vorrichtung nach Anspruch 1 oder 2 **dadurch gekennzeichnet, dass** als Geber für das Stillstandssignal der Zündschlüssel für die Antriebsmaschine eines LKW-Zuges in dem Sinne benutzt wird, dass bei Abzug des Zündschlüssels ein Stillstandssignal generiert wird und bei eingestecktem Zündschlüssel ein Befüllen des Luftschlauchs ausgeschlossen ist bzw. beim Einstecken des Zündschlüssels das Entlüften des Luftschlauchs eingeleitet wird.

8. Vorrichtung nach einem der Ansprüche 1 oder 2, **dadurch gekennzeichnet, dass** als Stillstands-Signalgeber ein Schock-Sensor, Bewegungsmelder, Rotationsmesser oder ein Gerät für Satelliten-Ortungssysteme vorgesehen ist.

9. Vorrichtung nach einem der einem der Ansprüche 1 bis 8, **dadurch gekennzeichnet, dass** für das Befüllen des Luftschlauchs ein gesonderter Druckbehälter vorgesehen ist.

10. Vorrichtungen nach einem der vorhergehenden Ansprüche, **dadurch gekennzeichnet, dass** ein Anhänger oder Sattelauflieger von einer Antriebseinheit abgekoppelt wird und mit einer von der Antriebseinheit unabhängigen Stromquelle ausgestattet ist.
